# EUROPÄISCHE PATENTSCHRIFT

(11) **EP 1 345 797 B1**
(45) Veröffentlichungstag und Bekanntmachung des Hinweises auf die Patenterteilung: **11.05.2005**
(21) Anmeldenummer: 01974233.7
(22) Anmeldetag: 07.09.2001
(51) Int. Cl.: B60R 22/46

(54) **SICHERHEITSGURTAUFROLLER MIT EINER VORSTRAFFEINRICHTUNG**
SAFETY BELT RETRACTOR WITH BELT TENSIONER
ENROULEUR DE CEINTURE DE SECURITE AVEC PRETENSIONNEUR

(30) Priorität: 21.12.2000 DE 10064352
(43) Veröffentlichungstag der Anmeldung: 24.09.2003
(73) Patentinhaber: Autoliv Development AB, 447 83 Vargarda (SE)
(72) Erfinder: LUCHT, Andreas, 25358 Horst (DE); SINGER, Klaus-Peter, 22399 Hamburg (DE); WITTENBERG, Geert, Helge, 22848 Norderstedt (DE); ZIEL, Erik, 25451 Quickborn (DE); MATZEN, Frank, 22459 Hamburg (DE)
(74) Vertreter: Müller, Karl-Ernst, Dr., Dipl.-Ing.
(86) Internationale Anmeldenummer: PCT/EP2001/010355
(87) Internationale Veröffentlichungsnummer: WO 2002/049886

(56) Entgegenhaltungen:
- EP-A- 0 893 313
- DE-A- 3 019 298

## Beschreibung

Die Erfindung betrifft einen Sicherheitsgurtaufroller, insbesondere für den Einsatz in Kraftfahrzeugen, mit einem fahrzeugsensitiv und/oder gurtbandsensitiv angesteuerten Blockiersystem und mit einer auf die Gurtwelle einwirkenden Straffeinrichtung, wobei die Gurtwelle mit einem von einem Elektromotor als Strafferantrieb über ein zwischengeschaltetes Getriebe angetriebenen Abtriebsrad kuppelbar ist und das Getriebe mindestens eine Schaltstellung zur Ausführung einer Vorabstraffung des Insassen durch Rückdrehung der Gurtwelle in Aufwickelrichtung aufweist.

Ein Sicherheitsgurtaufroller mit den vorgenannten Merkmalen ergibt sich aus der EP 0 893 313 A2. An die Gurtwelle des Gurtaufrollers ist ein sowohl in der Gurtabwickelrichtung als auch in der Gurtaufwickelrichtung drehbarer Elektromotor ankuppelbar, von welchem über ein zwischengeschaltetes Getriebe in Abhängigkeit von bestimmten Fahrsituationen einstellbare Drehmomente auf die Gurtwelle zur Einwirkung bringbar sind. Dabei kann in einer vorgegebenen Schaltposition des Getriebes das vom Elektromotor gelieferte Drehmoment zum Straffen des Gurtbandes auf die Gurtwelle übertragen werden. Hinsichtlich eines derartigen Straffens ist bei dem bekannten Sicherheitsgurtaufroller in eine sogenannte Vorstraffung und in eine Leistungsstraffung unterschieden. Im Rahmen der sogenannten Vorstraffung wird der angeschnallte Insasse bei Auftreten von Geschwindigkeitsänderungen bzw. Verzögerungswerten unterhalb der für die Auslösung der Leistungsstraffung bei einem Unfall maßgeblichen Auslöseschwelle mit einem verminderten Drehmoment des Elektromotors in seine normale Sitzposition gezogen und Gurtlose aus dem Sicherheitsgurt herausgenommen. Da bei Nachlassen der Geschwindigkeitsänderung die Vorab-Straffung beendet wird und als reversibler Vorgang bei Auftreten einer weiteren entsprechenden Fahrsituation erneut eingeleitet wird, wird dem angeschnallten Fahrzeuginsassen ein Gefühl aktiver Sicherheit vermittelt. Wird die Auslöseschwelle für die Leistungsstraffung bei einem Unfall überschritten, arbeitet der Elektromotor mit einem entsprechend hohen Drehmoment.

Im Zusammenhang mit der Vorstraffung des Sicherheitsgurtes kann die nachteilige Situation einer Selbstblockade des Sicherheitsgurtes eintreten dadurch, daß über die Vorstraffung alle Gurtlose aus dem Sicherheitsgurtsystem genommen ist und der Sicherheitsgurt am Körper der angeschnallten Person stramm anliegt, wobei je nach Fahrsituation am Ende des Vorstraffervorganges nicht ausgeschlossen ist, daß über eine geringe Vorwärtsverlagerung des Körpers des angeschnallten Insassen die Sperrscheibe des gurtaufrollerseitigen Blockiersystems in einen lastübertragenden Eingriff mit einem Gehäuseteil einsteuert wird. Soweit in dieser Sperrstellung der Sperrscheibe es einer Rückdrehung der Gurtwelle in Gurteinzugsrichtung bedarf, um die Sperrscheibe aus ihrer lastübertragenden Stellung herauszuführen, muß in nachteiliger Weise auch nach Abschluß jeder reversiblen Vorstraffung eine zusätzliche Nachstraffung mit einer etwas höheren Kraft als beim Vorstraffen erfolgen, was zu einer unerwünschten Belastung des Systems bzw. Minderung des Tragekomforts für den Fahrzeuginsassen führt.

Der Erfindung liegt daher die Aufgabe zugrunde, bei einem Sicherheitsgurtaufroller mit den gattungsgemäßen Merkmalen ein frühzeitiges Ansprechen des Blockiersystems zu vermeiden und dadurch eine Selbstblockade auszuschalten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß im Bereich der Kupplung zwischen Abtriebsrad und Gurtwelle eine über die Drehung des Abtriebsrades in Gurteinzugsrichtung und in Gurtauszugsrichtung steuerbare und nur während des Straffvorganges wirksame Vorverriegelungseinrichtung für die Gurtwelle ausgebildet ist, deren Verriegelung mit der Gurtwelle bei Überschreiten einer vorbestimmten, in Gurtauszugsrichtung auf die Gurtwelle einwirkenden Last aufgehoben wird. Die Erfindung beruht somit auf dem Prinzip, daß während des Vorstraffvorganges die Vorverriegelungseinrichtung permanent zugeschaltet ist, so daß während des Vorstraffprozesses bzw. unmittelbar im Anschluß daran die Gurtwelle über die Vorverriegelungseinrichtung in Gurtauszugsrichtung gesperrt ist, so daß es bei einem Zug am Gurtband zunächst nicht zu einem Ansprechen der Sperrscheibe des Blockiersystems kommen kann. Kommt es am Ende des Vorstraffprozesses dann nicht zu einer Belastung des Gurtbandes in Gurtauszugsrichtung, wird die Vorverriegelungseinrichtung durch eine kurze Drehung des Abtriebsrades über den Elektromotor in Gurtauszugsrichtung wieder entriegelt.

Soweit während des Eingriffes der Vorverriegelungseinrichtung es zu einem schweren Unfall kommt, bei dem die Auslösung des gurtaufrollerseitigen Blockiersystems erforderlich ist, wird beispielsweise durch Abscheren der Eingriff der Vorverriegelungseinrichtung aufgehoben, so daß durch eine Drehung der Gurtwelle in Gurtabzugsrichtung die Aussteuerung der Sperrscheibe in den lastübertragenden Eingriff mit dem Gehäuse des Gurtaufrollers erfolgen kann.

Nach einem Ausführungsbeispiel der Erfindung ist die Vorverriegelungseinrichtung durch eine am Gehäuse zwischen einer Eingriffsstellung in eine an einer mit der Gurtwelle verbundenen Kupplungsglocke ausgebildeten Außenverzahnung und einer Freigabestellung schwenkbar gelagerte Zahnscheibe gebildet, die über ein Getriebe an das Abtriebsrad kuppelbar ist. Die Kupplungsglocke dient dabei nicht nur zum Angriff der Zahnscheibe als Vorverriegelungseinrichtung, sondern stellt bei Ansprechen der Vorstraffung auch über ein zum Abtriebsrad wirkendes Kupplungselement die Kupplungsverbindung zwischen dem Abtriebsrad und der Gurtwelle her. Soweit also während des Straffvorganges die Zahnscheibe in Eingriff mit der mit der Gurtwelle verbundenen Kupplungsglocke gehalten ist, kann sich bei einer auf die Gurtwelle einwirkenden Last in Gurtauszugsrichtung die Gurtwelle nicht in der Gurtauszugsrichtung drehen, so daß ein Ansprechen des Blockiersystems vermieden ist. Übersteigt die auf die Gurtwelle einwirkende Gurtkraft ein konstruktiv eingestelltes Maß, so gibt die Vorverriegelungseinrichtung beispielsweise durch Abscheren der Zahnscheibe nach, so daß die Gurtaufwickelwelle sich in Gurtauszugsrichtung drehen kann und dabei unter Berücksichtigung des konstruktiv vorgegebenen Steuerweges die Sperrscheibe des Blockiersystems in den lastübertragenden Eingriff mit dem Gehäuseteil aussteuert.

Nach einem ersten Ausführungsbeispiel der Erfindung besteht das Getriebe aus einem Übertragungsmechanismus mit einem mit seinem einen Ende an der Zahnscheibe angreifenden und an seinem anderen Ende mit einem am Gehäuse schwenkbar gelagerten Steuersegment verbundenen Übertragungshebel, wobei nach einem Ausführungsbeispiel das Steuersegment von dem Abtriebsrad zwischen einer die Zahnscheibe außer Eingriff mit der Außenverzahnung der Kupplungsglocke haltenden Lösestellung und einer die Zahnscheibe in Eingriff mit der Außenverzahnung der Kupplungsglocke steuernden Riegelstellung verschwenkbar ist.

Soweit vorgesehen sein kann, daß zwischen Abtriebsrad und Steuersegment eine große Übersetzung ausgebildet ist, ist damit ein schnelles Ansprechen des Steuersegmentes bei beginnender Drehung des Abtriebsrades in der Gurteinzugsrichtung gewährleistet.

In einer ersten Ausführungsform kann das Steuersegment als Zahnsegment ausgebildet sein, welches mit einer an dem Abtriebsrad ausgebildeten Außenverzahnung zusammenwirkt. Soweit das Zahnsegment für eine schnelle Steuerung vor Beginn der Straffdrehung des Abtriebsrades wie auch bei der Rückdrehung des Abtriebsrades zur Aufhebung der Vorverriegelung in Kontakt mit dem Abtriebsrad stehen muß, ist nach einem Ausführungsbeispiel der Erfindung vorgesehen, daß das Zahnsegment in seiner Lösestellung wie auch in seiner Riegelstellung jeweils mit wenigstens einem Zahn in Kontakt mit der Außenverzahnung des Abtriebsrades verbleibt und bei Drehung des Abtriebsrades die Außenverzahnung des Abtriebsrades in beiden Drehrichtungen jeweils über den in Eingriff stehenden Zahn des Zahnsegmentes hinwegratscht. Hierbei kann es zweckmäßig sein, wenn die Verzahnung des Zahnsegmentes elastisch ausgebildet ist.

In einer alternativen Ausführungsform kann vorgesehen sein, daß zwischen Steuersegment und Abtriebsrad ein permanenter Reibschluß ausgebildet ist.

Hinsichtlich der Ansteuerung des Steuersegmentes durch das Abtriebsrad kann vorgesehen sein, daß das Steuersegment sowohl in seine Lösestellung als auch in seine Riegelstellung durch eine Feder vorgespannt ist; während bei der Verschwenkung des Steuerelementes von der Lösestellung in dessen Riegelstellung sich das Abtriebsrad mit beginnender Vorstraffung mit entsprechender Geschwindigkeit dreht und dabei die Kraft der das Steuersegment beaufschlagenden Feder überwindet, unterstützt die das Steuersegment in dessen Lösestellung vorspannende Feder die Entriegelung der Vorverriegelungseinrichtung am Ende der Vorstraffung.

Damit die Zahnscheibe durch das Überratschen der Außenverzahnung der Kupplungsscheibe nicht zu stark belastet wird, ist vorgesehen, daß in der Verbindung zwischen Zahnscheibe und Übertragungshebel ein Spiel ausgebildet und die Zahnscheibe in ihrer Eingriffsstellung mit der Außenverzahnung der Kupplungsglocke mittels einer Feder vorgespannt ist, so daß die Zahnscheibe gegenüber dem feststehenden Übertragungshebel beim Überratschen nachgeben kann.

Gemäß einem zweiten Ausführungsbeispiel der Erfindung besteht das Getriebe aus einem mit dem Abtriebsrad kämmenden Übertragungsrad und einem davon angetriebenen Kupplungsrad, wobei die Verbindung zwischen der Zahnscheibe und dem Kupplungsrad reibschlüssig mit der Möglichkeit einer Relativbewegung von Zahnscheibe und Kupplungsrad zueinander ausgeführt ist. Insoweit wird die Drehbewegung des Abtriebsrades unmittelbar über einen Dreh-Übertragungsmechanismus in die Steuerung der Sperrscheibe umgesetzt, womit nicht nur eine Verringerung der Baugröße des Übertragungsmechanismus, sondern auch eine Reduzierung der entstehenden Geräusche einhergeht. Da sich bei eingeschwenkter Zahnscheibe der Übertragungsmechanismus gemeinsam mit dem Abtriebsrad weiterdreht, sind Zahnscheibe und Kupplungsrad derart aneinander gekuppelt, dass eine Relativdrehung der vorgenannten Teile zueinander und damit ein Weiterdrehen des Kupplungsrades bei feststehender Zahnscheibe ermöglicht ist.

Im einzelnen ist hierbei vorgesehen, dass das Kupplungsrad koaxial zur Drehachse der Zahnscheibe angeordnet ist und über ein in einer an dem Kupplungsrad axial angeordneten Hülse axial gegen Federwirkung verschiebbares Kupplungselement auf die Zahnscheibe einwirkt, wobei in zweckmäßiger Weise zwischen dem Kupplungselement und dem Kupplungsrad mit Hülse eine das Kupplungselement in Eingriff mit der Zahnscheibe vorspannende Feder angeordnet ist.

Zur Verbesserung der Mitnahme und Einsteuerung der Zahnscheibe mit der beginnenden Drehung des Kupplungsrades ist nach einem Ausführungsbeispiel der Erfindung vorgesehen, dass an Kupplungselement und Zahnscheibe jeweils eine axial ineinandergreifende Verzahnung mit axial vorstehenden Zahnflanken ausgebildet ist und die Zahnflanken bei der Relativdrehung von Kupplungselement und Zahnscheibe zueinander übereinander hinwegrutschen. Da am Ende des Verriegelungszustandes zum Lösen der Zahnscheibe aus ihrem Eingriff mit der Außenverzahnung der Kupplungsglocke gegebenenfalls etwas mehr Kraft benötigt wird als zum Einsteuern der Zahnscheibe, ist nach einem Ausführungsbeispiel der Erfindung vorgesehen, dass die Steigung der Zahnflanken entgegen der Einsteuerungseinrichtung der Zahnscheibe in die Außenverzahnung der Kupplungsglocke steiler ausgebildet ist als in der Einsteuerungsrichtung.

Nach einem Ausführungsbeispiel der Erfindung ist das Kupplungselement aus einem elastischen Kunststoff ausgebildet; alternativ kann vorgesehen sein, dass zwischen dem aus einem unnachgiebigen Material bestehenden Kupplungselement und der Zahnscheibe eine zusätzliche Feder angeordnet ist.

Soweit die Vorverriegelung der Zahnscheibe mit der Außenverzahnung der Kupplungsglocke während der Vorstraffung aufrechtzuerhalten ist, ist nach einem Ausführungsbeispiel der Erfindung vorgesehen, daß die Verzahnung der während des Straffvorgangs in Eingriff mit der Außenverzahnung der Kupplungsglocke eingesteuerten Zahnscheibe derart ausgebildet ist, daß bei Drehung der Gurtwelle mit Kupplungsglocke in Straffrichtung die Außenverzahnung der Kupplungsglocke über die Verzahnung der Zahnscheibe hinwegratscht.

Nach einem Ausführungsbeispiel der Erfindung ist vorgesehen, daß das Getriebe derart ausgebildet ist, daß die Zahnscheibe mit einem zeitlichen Versatz der Drehung des Abtriebsrades in Gurtauszugsrichtung nachfolgt. Dieser Vorschlag trägt dem Umstand Rechnung, daß aufgrund der zwischen der Kupplungsglocke und dem Antriebsrad zur Übertragung der Antriebsbewegung des Elektromotors auf die Gurtwelle vorgesehenen Kupplung für deren Ein- bzw. Aussteuerung ein gewisses Bewegungsspiel zwischen dem Abtriebsrad und der Kupplungsglocke eingerichtet sein muß. Dieses Bewegungsspiel kann gemäß dem Ausführungsbeispiel der Erfindung im Bereich des Getriebes vorgesehen sein, so daß das Abtriebsrad zum Lösen seiner Kupplung zur Kupplungsglocke eine Teildrehung ausführen kann, bevor die Aussteuerung der Zahnscheibe aus der Außenverzahnung der Kupplungsglocke beginnt. Im Einzelfall kann dabei das Abtriebsrad mit einem Freilauf an den Übertragungsmechanismus bzw. das Übertragungsrad gekuppelt sein.

Soweit gemäß den weiteren Ausführungsbeispielen der Erfindung ein derartiges Bewegungsspiel in dem Getriebe nicht vorgesehen ist, kann ein derartiges Bewegungsspiel im Bereich der zwischen Abtriebsrad und Kupplungsglocke bestehenden Kupplung ausgebildet sein.

Die nach einem weiteren Ausführungsbeispiel der Erfindung vorgesehene Maßnahme, wonach die Lagerung der Zahnscheibe derart ausgebildet ist, daß die Zahnscheibe bei Drehung des Abtriebsrades in Gurtauszugsrichtung vor ihrer Aussteuerung aus der Außenverzahnung der Kupplungsglocke über einen vorgegebenen Weg der Drehung der Kupplungsglocke in Gurtauszugsrichtung nachfolgt, soll eine dämpfende Drehung des von dem Elektromotor angetriebenen Abtriebsrades in Gurtauszugsrichtung ermöglichen. Soweit nämlich nach Beendigung der Vorstraffung unter Umständen das Gurtband eng am Körper des angeschnallten Insassen anliegt und somit gegebenenfalls unter einer beispielsweise durch die Kleidung des Insassen bewirkten Spannung steht, kann das Lösen der Vorverriegelung durch Aussteuern der Zahnscheibe mittels der Rückdrehung des Antriebsrades dazu führen, daß es zu einer Entspannung des über den Körper des Insassen verlaufenden Gurtbandes und damit zu einem derart schnellen Gurtbandauszug kommt, daß der dem Blockiersystem des Gurtaufrollers zugehörige gurtbandsensitive Sensor anspricht und das Blockiersystem des Gurtaufrollers verriegelt. Zur Vermeidung einer derartigen schnellen bzw. schlagartigen Entspannung des Gurtbandes ist vorgesehen, daß der Elektromotor die für die Aufhebung der Vorverriegelung erforderliche Rückdrehung des Abtriebsrades in Gurtauszugsrichtung nur gedämpft zuläßt, und hierfür ist erforderlich, daß die Zahnscheibe zunächst einmal über einen vorgegebenen Weg der Rückdrehung des Abtriebsrades nachfolgt, bevor die Aussteuerung der Zahnscheibe aus der Außenverzahnung der Kupplungsglocke herbeigeführt wird.

In der Zeichnung sind Ausführungsbeispiele der Erfindung wiedergegeben, welche nachstehend beschrieben sind. Es zeigen:
- Fig. 1: einen Sicherheitsgurtaufroller mit Vorstraffeinrichtung und Vorverriegelungseinrichtung einer teilweise geschnittenen Seitenansicht,
- Fig. 2: die Vorverriegelungseinrichtung in einer Einzeldarstellung in entriegeltem Zustand in der Lösestellung des Steuersegmentes,
- Fig. 3: den Gegenstand der Figur 2 in verriegeltem Zustand der Vorverriegelungseinrichtung in der Riegelstellung des Steuersegmentes.
- Fig. 4: ein anderes Ausführungsbeispiel des Sicherheitsgurtaufrollers mit Vorstraffeinrichtung und Vorverriegelungseinrichtung in einer Darstellung gemäß Figur 1,
- Fig. 5: die Vorverriegelungseinrichtung mit verriegelter Zahnscheibe,
- Fig. 6: den Gegenstand der Figur 5 bei entriegelter Zahnscheibe,
- Fig. 7: die Zahnscheibe mit Kupplungsrad in einer geschnittenen Seitenansicht,
- Fig. 8: den Gegenstand der Figur 7 in einer auseinandergezogenen Darstellung seiner Einzelteile,
- Fig. 9: den Gegenstand der Figur 8 in einer anderen Ausführungsform.

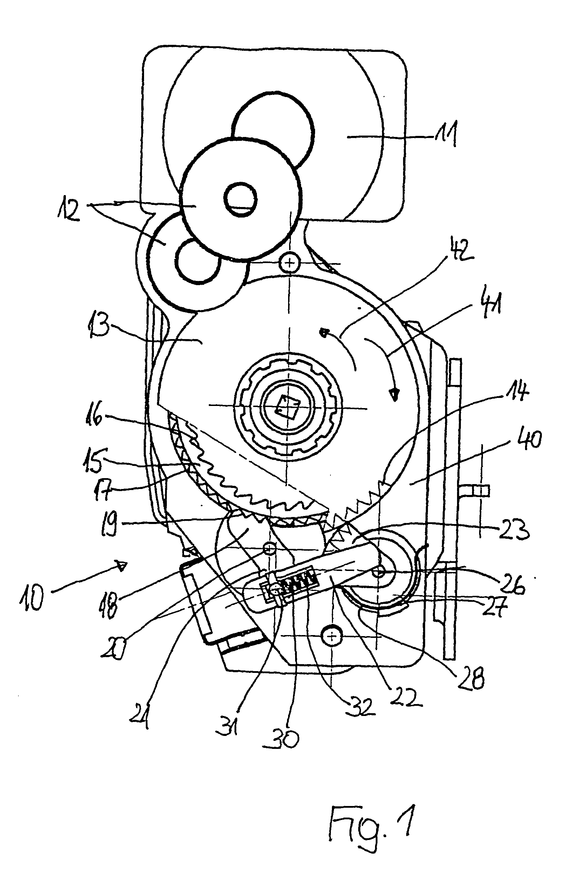

In Figur 1 ist eine Seitenansicht eines Gurtaufrollers 10 auf die Strafferseite dargestellt; auf dieser Funktionsseite ist das fahrzeugsensitiv und/oder gurtbandsensitiv angesteuerte Blockiersystem nicht erkennbar; es ist auf der gegenüberliegenden Seite des Gurtaufrollers 10 untergebracht und besteht in der Regel aus einer mit der Gurtwelle gekoppelten Sperrscheibe, die im Auslösefall in eine gehäusefeste Verzahnung eingesteuert wird und eine lastübertragende Verbindung zwischen der von der Gurtbandkraft belasteten Welle und dem Gehäuse des Gurtaufrollers herstellt.

Zur Ausführung der für den vorliegenden Erfindungsaspekt allein bedeutsamen Vorstraffung ist an dem Gehäuse 40 des Gurtaufrollers 10 ein Elektromotor 11 angeflanscht, der über ein Getriebe 12 auf ein Abtriebsrad 13 wirkt, welches mit einer ausschnittsweise angedeuteten Außenverzahnung 14 versehen ist. Innenseitig des Abtriebsrades 13 ist eine mit der Gurtwelle verbundene Kupplungsglocke 15 angeordnet, die mit einer Innenverzahnung 16 versehen ist, über welche mittels eines nicht dargestellten Kupplungselementes im Auslösefall eine Kupplung zwischen dem Abtriebsrad 13 und der Gurtwelle erfolgt.

Zum Zusammenwirken mit der zusätzlich vorgesehenen Vorverriegelungseinrichtung weist die Kupplungsglocke 15 eine Außenverzahnung 17 auf, der eine um eine gehäusefeste Lagerung 20 schwenkbar gelagerte zweiarmige Zahnscheibe 18 zugeordnet ist. Die Zahnscheibe 18 trägt an ihrem einen Arm eine Verzahnung 19 zum Zusammenwirken mit der Außenverzahnung 17 der Kupplungsglocke 15 und ist an ihrem über die gehäusefeste Lagerung 20 hinausragenden hinteren Arm 21 mit dem einen Ende eines Übertragungshebels 22 verbunden, dessen anderes Ende an einem als Zahnsegment 23 ausgebildeten Steuersegment befestigt ist. Das Zahnsegment 23 ist seinerseits um eine gehäusefeste Lagerung 26 schwenkbar gelagert, wobei die beiden Endlagen des Zahnsegmentes 23 mit der Eingriffsstellung der Zahnscheibe 18 in die Außenverzahnung 17 der Kupplungsglocke 15 einerseits und der Freigabestellung der Zahnscheibe 18 für die Kupplungsglocke 15 andererseits korrespondieren. In Figur 1 ist dabei die Riegelstellung des Zahnsegmentes 23 dargestellt, in welcher das Zahnsegment 23 über den Übertragungshebel 22 die Zahnscheibe 18 mit deren Verzahnung 19 in Eingriff mit der Außenverzahnung 17 der Kupplungsglocke 15 eingesteuert hat.

Da während des Vorstraffvorganges und Drehung sowohl des Abtriebsrades 13 wie auch der Kupplungsglocke 15 in Richtung des Pfeils 41, also in Gurteinzugsrichtung, die Verzahnung 19 der Zahnscheibe 18 in ständigem Kontakt mit der Außenverzahnung 17 der Kupplungsglocke 15 steht, ist die Verzahnung 19 der Zahnscheibe 18 derart ausgelegt, daß sie bei Drehung in Richtung des Pfeils 41 über die Außenverzahnung 17 der Kupplungsglocke 15 hinwegratscht. Um die dabei entstehenden Ausweichbewegungen der Zahnscheibe 18 abzufangen, ist die Verbindung zwischen dem hinteren Arm 21 der Zahnscheibe 18 und dem Übertragungshebel 22 mit einem Spiel dadurch ausgebildet, daß in dem Übertragungshebel 22 ein Langloch 30 angeordnet ist, in welches der hintere Arm 21 der Zahnscheibe 18 mit einem Führungsstift 31 eingreift. Eine Druckfeder 32 spannt den hinteren Arm 21 derart vor, daß die Zahnscheibe 18 in Eingriff mit der Außenverzahnung 17 der Kupplungsglocke 15 gehalten ist; durch die Langlochanordnung ist aber sichergestellt, daß die Zahnscheibe 18 beim Überratschen der Außenverzahnung 17 der Kupplungsglocke 15 die gewünschten Ausweichbewegungen ausführen kann.

Soweit in den Figuren 1 und 3 die Riegelstellung des Zahnsegmentes 23 dargestellt ist, steht der äußere Zahn 25 noch in Eingriff mit der Außenverzahnung 14 des Abtriebsrades 13, so daß bei einer Rückdrehung des Abtriebsrades 13 das Zahnsegment 23 mitgenommen wird, wobei bei der Weiterdrehung des Abtriebsrades in Richtung des Pfeils 41 die Außenverzahnung 14 über den Zahn 25 des Zahnsegmentes 23 hinwegratscht. Soweit dabei auch das Zahnsegment 23 Ausweichbewegungen vollführen können soll, ist auch diesem Gesichtspunkt durch die Anordnung einer U-förmigen Blattfeder 28, die mittels eines Federhalters 27 befestigt ist, Rechnung getragen. Beim Überratschen in seinen beiden Endlagen arbeitet das Zahnsegment 23 gegen die Kraft des jeweiligen Federarmendes.

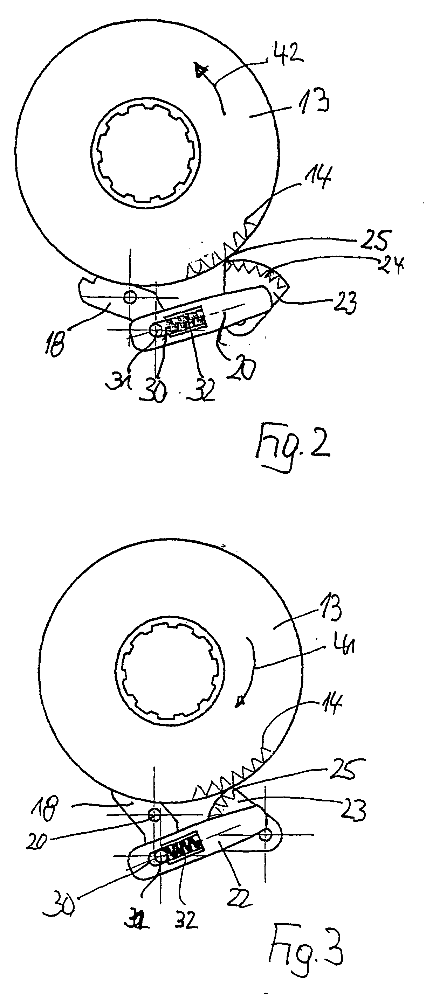

Soll am Ende des Vorstraffvorganges die während des Straffvorganges vorgesehene Vorverriegelung wieder aufgehoben werden, so wird über den Elektromotor 11 das Abtriebsrad 13 in Richtung des Pfeils 42 um einen kurzen Betrag rückgedreht, wie sich dies aus Figur 2 ergibt. Da in der in Figuren 1 bzw. 3 dargestellten Riegelstellung des Zahnsegmentes 23 der Zahn 25 in Eingriff mit der Außenverzahnung 14 des Abtriebsrades 13 bleibt, führt eine Rückdrehung des Abtriebsrades 13 in Richtung des Pfeils 42 zu einer Verschwenkung des Zahnsegmentes 23 in die in Figur 2 dargestellte Lösestellung, und durch die Verschwenkung des Zahnsegmentes 23 wird über die Verschiebung des Übertragungshebels 22 die Zahnscheibe 18 außer Eingriff mit der Außenverzahnung 17 der Kupplungsglocke 15 gezogen. Hat das Zahnsegment 23 seine in Figur 2 dargestellte Endstellung als Lösestellung erreicht, bleibt der entsprechende Zahn 25 in Eingriff mit der Außenverzahnung 14 des Abtriebsrades 13, so dass bei einer gegebenenfalls noch geschehenden Weiterdrehung des Abtriebsrades 13 dessen Außenverzahnung 14 über den Zahn 25 des Zahnsegmentes 23 hinwegratscht. Zur Begrenzung der Schwenkbewegung des Zahnsegmentes 23 ist die U-förmige Blattfeder 28 vorgesehen, deren beide äußere Federarme das Zahnsegment 23 zwischen sich einfassen und einerseits als Anschlag für die beiden Stellungen des Zahnsegmentes 23 dienen und andererseits für eine entsprechende Federvorspannung sorgen.

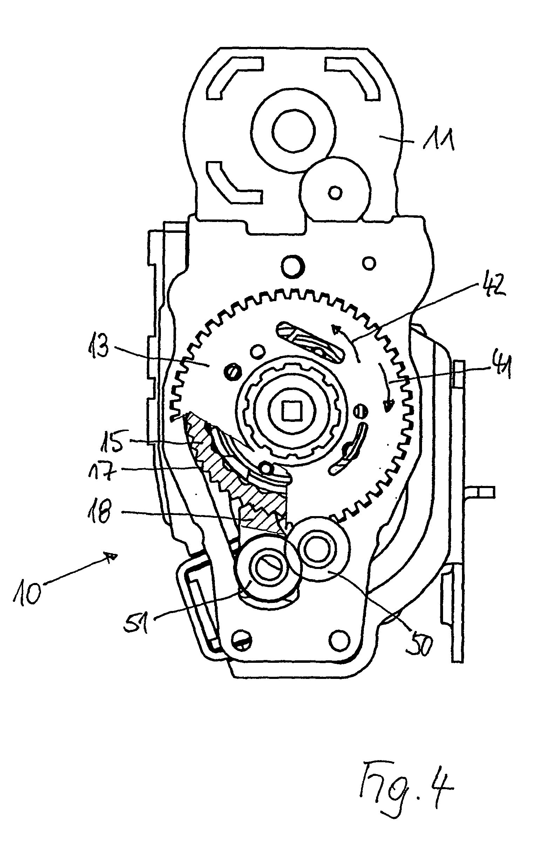

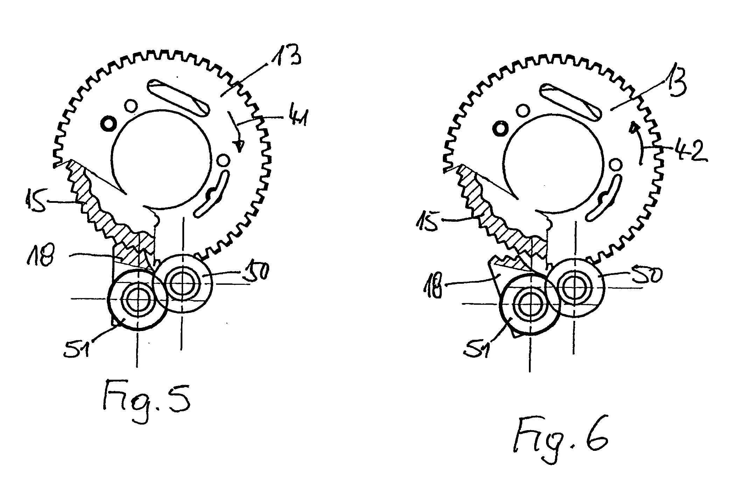

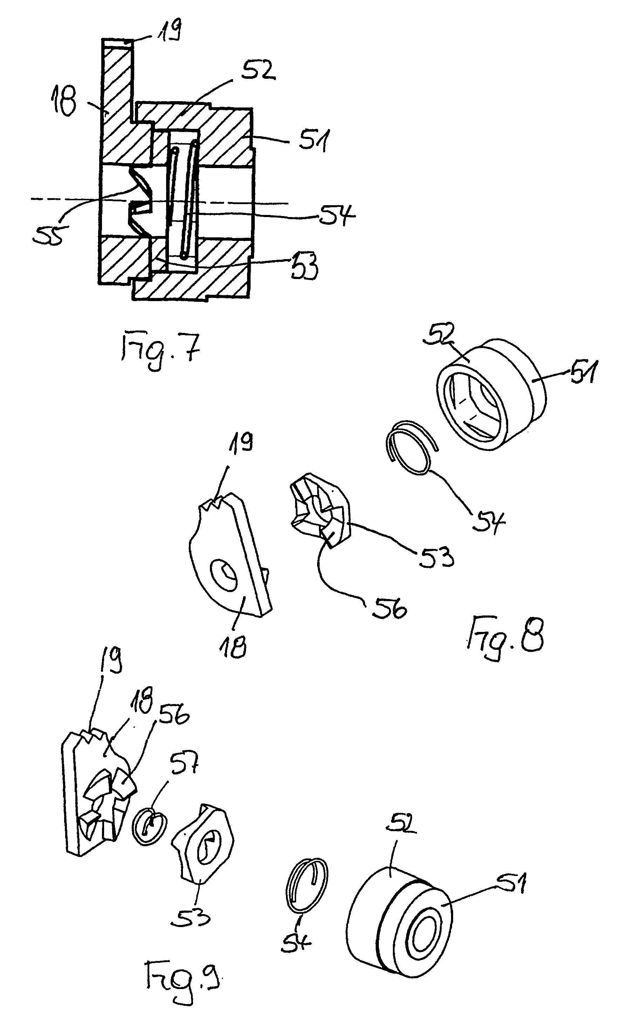

Der in Figur 4 dargestellte Sicherheitsgurtaufroller weist mit Ausnahme der Ausbildung des Übertragungsmechanismus den gleichen Aufbau auf wie der zu Figur 1 beschriebene Gurtaufroller, und insoweit wird auf die zu Figur 1 bereits erteilte Erläuterung der Ausbildung wie auch der Funktion des Gurtaufrollers Bezug genommen. Bei dem in Figur 4 dargestellten Ausführungsbeispiel besteht der Übertragungsmechanismus aus einem mit dem Abtriebsrad 13 kämmenden Übertragungsrad 50, welches für eine Umkehr der Drehrichtung des Abtriebsrades 13 benötigt wird. Das Übertragungsrad 50 treibt seinerseits ein Kupplungsrad 51, welches über eine im einzelnen in den Figuren 7 bis 9 dargestellte Axialkupplung mit der Sperrscheibe 18 gekuppelt ist. Im einzelnen zeigt weiterhin die Figur 5 die Verhältnisse bei der Strammsituation und Drehung des Abtriebsrades 13 in Richtung des Pfeils 41, wobei die im Uhrzeigersinn gerichtete Drehrichtung des Abtriebsrades 13 durch das Übertragungsrad 50 umgekehrt wird, so dass wiederum über den Antrieb des Kupplungsrades 51 eine Drehrichtungsumkehr derart erfolgt, dass sich das Kupplungsrad 51 gleichsinnig mit dem Abtriebsrad 13 dreht und dabei die Zahnscheibe 18 im Uhrzeigersinn in die Außenverzahnung 17 der Kupplungsglocke 15 einsteuert. Die Lösestellung der Zahnscheibe ist entsprechend in Figur 6 dargestellt, und diese Lösestellung wird dadurch bewirkt, dass das Abtriebsrad 13 kurzzeitig entgegen dem Uhrzeigersinn in Richtung des Pfeils 42 gedreht wird. Aufgrund der Drehung des Kupplungsrades 51 entgegen dem Uhrzeigersinn erfolgt eine unmittelbare Aussteuerung der Zahnscheibe 18 aus der Verzahnung 17.

Der Aufbau der axialen Kupplung ist aus den Figuren 7 bis 9 ersichtlich. Hieraus ergibt sich, dass das Kupplungsrad 51 koaxial mit der Drehachse der Zahnscheibe 18 ausgerichtet und angeordnet ist, wobei das Kupplungsrad 51 einstückig eine axial abstehende und die Zahnscheibe mit einem Absatz einfassende Hülse 52 aufweist. Im Inneren der Hülse 52 ist ein Kupplungselement 53 axial verschiebbar, welches, wie aus Figur 8 ersichtlich, über eine Vierkantausbildung formschlüssig mit dem Kupplungsrad 51 verbunden ist, so dass sich das Kupplungselement 53 jeweils mit dem Kupplungsrad 51 dreht, jedoch dabei im Inneren der Hülse 52 axial verschiebbar ist. Die Axialverschiebung erfolgt gegen die Wirkung einer zwischen dem Kupplungselement 53 und dem Kupplungsrad 51 angeordneten Feder 54, die das Kupplungselement 53 in Eingriff mit der Zahnscheibe 18 vorspannt.

Zur Verbesserung des Mitnahmeeffektes zwischen Kupplungsrad 51 und Zahnscheibe 18 ist an dem Kupplungselement 53 wie auch an der dem Kupplungselement 53 zugewandten Seite der Zahnscheibe 18 jeweils eine Verzahnung 55 mit axial vorstehenden Zahnflanken 56 ausgebildet, wobei aufgrund der axialen Bewegbarkeit des Kupplungselementes 53 in der Hülse 52 die Zahnflanken 56 der beiderseitigen Verzahnungen 55 jeweils übereinander hinwegrutschen können.

Wird ausgehend von der in Figur 6 dargestellten Lösestellung der Zahnscheibe 18 die Strammbewegung mit einer Drehung des Abtriebsrades 13 in Strammrichtung Pfeil 41 eingeleitet, so wird über das Übertragungsrad 50 auch das Kupplungsrad 51 sofort in Drehung versetzt, und aufgrund der reibschlüssigen (durch Formschluss der Verzahnung 55 unterstützten) Verbindung zwischen Kupplungsrad 51 bzw. Kupplungselement 53 und Zahnscheibe 18 wird die Zahnscheibe 18 sofort in die Außenverzahnung 17 der Kupplungsglocke 15 eingesteuert. Da bei Weiterdrehung des Abtriebsrades 13 bzw. des Kupplungsrades 51 bei feststehender Zahnscheibe 18 eine Relativbewegung der beiden Teile zueinander ermöglicht sein muss, können die Zahnflanken 56 der ineinandergreifenden Verzahnungen 55 übereinander hinwegrutschen, wobei aufgrund der axialen Verschiebbarkeit des Kupplungselementes 53 in der Hülse 52 eine entsprechende Ausweichbewegung des Kupplungslementes 53 erzielt ist. Diese axiale Verschiebung geschieht gegen die Wirkung der Feder 54, die jeweils das Kupplungselement 53 in Anlage an der Zahnscheibe 18 hält.

Bei dem in Figur 8 dargestellten Ausführungsbeispiel ist das Kupplungselement 53 aus einem elastischen Kunststoff ausgebildet, so dass nur eine Rückstellfeder 54 erforderlich ist. Gemäß Figur 9 kann alternativ das Kupplungselement 53 aber auch aus einem unnachgiebigen Material bestehen, und es kann dann zwischen der Zahnscheibe 18 und dem Kupplungselement 53 eine zusätzliche Feder 57 angeordnet sein, die bei der Verschiebung des Kupplungselementes 53 dieses in seiner Verschiebebewegung auffängt, bevor durch das Anschlagen des Kupplungselementes an der Zahnscheibe 18 Geräusche entstehen.

Es ist nicht weiter dargestellt, in welcher Weise bei Auftreten eines schweren Unfalls die gemäß Figur 1 wirksame Vorverriegelung der Kupplungsglocke 15 über die Zahnscheibe 18 aufzuheben ist, damit über einen kurzzeitigen Gurtbandauszug die Einsteuerung der Sperrscheibe in die gehäusefeste Verzahnung erfolgen kann; hierzu kann beispielsweise vorgesehen sein, daß die Zahnscheibe 18 mit einer Sollbruchstelle versehen ist, die bei Auftreten einer entsprechenden Belastung abschert.

## Patentansprüche

1. Sicherheitsgurtaufroller (10), insbesondere für den Einsatz in Kraftfahrzeugen, mit einem fahrzeugsensitiv und/oder gurtbandsensitiv angesteuerten Blockiersystem und mit einer auf die Gurtwelle einwirkenden Straffeinrichtung, wobei die Gurtwelle mit einem von einem Elektromotor (11) als Strafferantrieb über ein zwischengeschaltetes Getriebe (12) angetriebenen Abtriebsrad (13) kuppelbar ist und das Getriebe (12) mindestens eine Schaltstellung zur Ausführung einer Vorabstraffung des Insassen durch Rückdrehung der Gurtwelle in Aufwickelrichtung aufweist, **dadurch gekennzeichnet, dass** im Bereich der Kupplung zwischen Abtriebsrad (13) und Gurtwelle eine über die Drehung des Abtriebsrades (13) in Gurteinzugsrichtung und in Gurtauszugsrichtung steuerbare und nur während des Straffvorganges wirksame Vorverriegelungseinrichtung (18; 22, 23; 50, 51, 53) für die Gurtwelle ausgebildet ist, deren Verriegelung mit der Gurtwelle bei Überschreiten einer vorbestimmten, in Gurtauszugsrichtung auf die Gurtwelle einwirkenden Last aufgehoben wird.

2. Sicherheitsgurtaufroller nach Anspruch 1, **dadurch gekennzeichnet, dass** die Vorverriegelungseinrichtung durch eine am Gehäuse (40) zwischen einer Eingriffsstellung in eine an einer mit der Gurtwelle verbundenen Kupplungsglocke (15) ausgebildeten Außenverzahnung (17) und einer Freigabestellung schwenkbar gelagerte Zahnscheibe (18) gebildet ist, die über ein Getriebe (22, 23; 50, 51, 53) an das Abtriebsrad (13) kuppelbar ist.

3. Sicherheitsgurtaufroller nach Anspruch 1 oder 2, **dadurch gekennzeichnet, dass** das Getriebe aus einem Übertragungsmechanismus mit einem mit seinem einen Ende an der Zahnscheibe (18) angreifenden und an seinem anderen Ende mit einem am Gehäuse (40) schwenkbar gelagerten Steuersegment (23) verbundenen Übertragungshebel (22) besteht.

4. Sicherheitsgurtaufroller nach Anspruch 3, **dadurch gekennzeichnet, dass** das Steuersegment (23) von dem Abtriebsrad (13) zwischen einer die Zahnscheibe (18) außer Eingriff mit der Außenverzahnung (17) der Kupplungsglocke (15) haltenden Lösestellung und einer die Zahnscheibe (18) in Eingriff mit der Außenverzahnung (17) der Kupplungsglocke (15) steuernden Riegelstellung verschwenkbar ist.

5. Sicherheitsgurtaufroller nach Anspruch 4, **dadurch gekennzeichnet, dass** zwischen Abtriebsrad (13) und Steuersegment (23) eine große Übersetzung ausgebildet ist.

6. Sicherheitsgurtaufroller nach Anspruch 4 oder 5, **dadurch gekennzeichnet, dass** das Steuersegment als Zahnsegment (23) ausgebildet ist und mit einer an dem Abtriebsrad (13) ausgebildeten Außenverzahnung (14) zusammenwirkt.

7. Sicherheitsgurtaufroller nach Anspruch 6, **dadurch gekennzeichnet, dass** das Zahnsegment (23) in seiner Lösestellung wie auch in seiner Riegelstellung jeweils mit wenigstens einem Zahn (25) in Kontakt mit der Außenverzahnung (14) des Abtriebsrades (13) verbleibt und bei Drehung des Abtriebsrades (13) die Außenverzahnung (14) des Abtriebsrades (13) in beiden Drehrichtungen jeweils über den in Eingriff stehenden Zahn (25) des Zahnsegmentes (23) hinwegratscht.

8. Sicherheitsgurtaufroller nach Anspruch 7, **dadurch gekennzeichnet, dass** die Verzahnung (24) des Zahnsegmentes (23) elastisch ausgebildet ist.

9. Sicherheitsgurtaufroller nach Anspruch 4 oder 5, **dadurch gekennzeichnet, dass** zwischen Steuersegment und Abtriebsrad (13) ein permanenter Reibschluss ausgebildet ist.

10. Sicherheitsgurtaufroller nach einem der Ansprüche 4 bis 9, **dadurch gekennzeichnet, dass** das Steuersegment sowohl in seine Lösestellung als auch in seine Riegelstellung durch eine Feder (28) vorgespannt ist.

11. Sicherheitsgurtaufroller nach Anspruch 10, **dadurch gekennzeichnet, dass** in der Verbindung zwischen Zahnscheibe (18) und Übertragungshebel (22) ein Spiel ausgebildet und die Zahnscheibe (18) mittels einer Feder (32) in ihre Eingriffsstellung mit der Außenverzahnung (17) der Kupplungsglocke (15) vorgespannt ist.

12. Sicherheitsgurtaufroller nach Anspruch 1 oder 2, **dadurch gekennzeichnet, dass** das Getriebe aus einem mit dem Abtriebsrad (13) kämmenden Übertragungsrad (50) und einem davon angetriebenen Kupplungsrad (51) besteht, wobei die Verbindung zwischen der Zahnscheibe (18) und dem Kupplungsrad (51) reibschlüssig mit der Möglichkeit einer Relativbewegung von Zahnscheibe (18) und Kupplungsrad (51) zueinander ausgeführt ist.

13. Sicherheitsgurtaufroller nach Anspruch 12, **dadurch gekennzeichnet, dass** das Kupplungsrad (51) koaxial zur Drehachse der Zahnscheibe (18) angeordnet ist und über ein in einer an dem Kupplungsrad (51) axial angeordneten Hülse (52) axial gegen Federwirkung verschiebbares Kupplungselement (53) auf die Zahnscheibe (18) einwirkt.

14. Sicherheitsgurtaufroller nach Anspruch 13, **dadurch gekennzeichnet, dass** zwischen dem Kupplungselement (53) und dem Kupplungsrad (51) mit Hülse (52) eine das Kupplungselement (53) in Eingriff mit der Zahnscheibe (18) vorspannende Feder (54) angeordnet ist.

15. Sicherheitsgurtaufroller nach einem der Ansprüche 12 bis 14, **dadurch gekennzeichnet, dass** an Kupplungselement (53) und Zahnscheibe (18) jeweils eine axial ineinandergreifende Verzahnung (55) mit axial vorstehenden Zahnflanken (56) ausgebildet ist und die Zahnflanken (56) bei der Relativdrehung von Kupplungselement (53) und Zahnscheibe (18) zueinander übereinander hinwegrutschen.

16. Sicherheitsgurtaufroller nach Anspruch 15, **dadurch gekennzeichnet, dass** die Steigung der Zahnflanken (56) entgegen der Einsteuerungsrichtung der Zahnscheibe (18) in die Außenverzahnung (17) der Kupplungsglocke (15) steiler ausgebildet ist als in der Einsteuerungsrichtung.

17. Sicherheitsgurtaufroller nach einem der Ansprüche 13 bis 16, **dadurch gekennzeichnet, dass** das Kupplungselement (53) aus einem elastomeren Material besteht.

18. Sicherheitsgurtaufroller nach einem der Ansprüche 13 bis 16, **dadurch gekennzeichnet, dass** zwischen dem aus einem unnachgiebigen Material bestehenden Kupplungselement (53) und Zahnscheibe (18) eine zusätzliche Feder (57) angeordnet ist.

19. Sicherheitsgurtaufroller nach einem der Ansprüche 1 bis 18, **dadurch gekennzeichnet, dass** die Verzahnung (19) der während des Straffvorgangs in Eingriff mit der Außenverzahnung (17) der Kupplungsglocke (15) eingesteuerten Zahnscheibe (18) derart ausgebildet ist, dass bei Drehung der Gurtwelle mit Kupplungsglocke (15) in Straffrichtung die Außenverzahnung (17) der Kupplungsglocke (15) über die Verzahnung (19) der Zahnscheibe (18) hinwegratscht.

20. Sicherheitsgurtaufroller nach einem der Ansprüche 1 bis 19, **dadurch gekennzeichnet, daß** das Getriebe (22, 23; 50, 51, 53) derart ausgebildet ist, daß die Zahnscheibe (18) mit einem zeitlichen Versatz der Drehung des Abtriebsrades (13) in Gurtauszugsrichtung nachfolgt.

21. Sicherheitsgurtaufroller nach Anspruch 20, **dadurch gekennzeichnet, daß** das Abtriebsrad (13) mit einem Freilauf an den Übertragungsmechanismus (22, 23) oder das Übertragungsrad (50) gekuppelt ist.

22. Sicherheitsgurtaufroller nach einem der Ansprüche 1 bis 21, **dadurch gekennzeichnet, daß** die Lagerung der Zahnscheibe (18) derart ausgebildet ist, daß die Zahnscheibe (18) bei Drehung des Abtriebsrades (13) in Gurtauszugsrichtung vor ihrer Aussteuerung aus der Außenverzahnung (17) der Kupplungsglocke (15) über einen vorgegebenen Weg der Drehung der Kupplungsglocke (15) in Gurtauszugsrichtung nachfolgt.

## Claims

1. A safety belt retractor (10), particularly for use in motor vehicles, with a locking system controlled with vehicle sensitivity and/or belt strap sensitivity, and with a tensioning device acting on the belt shaft, the belt shaft being adapted to be coupled to an output wheel (13) driven by an electric motor (11) as a tensioner drive via an interposed transmission (12), and the transmission (12) comprising at least one shift position for effecting pre-tightening of the occupant by turning the belt shaft back in the retraction direction, **characterised in that** a pre-locking device (18; 22, 23; 50, 51, 53) for the belt shaft is constructed in the region of the coupling between the output wheel (13) and the belt shaft, said pre-locking device being controllable via the rotation of the output wheel (13) in the belt retraction direction and in the belt extension direction and being operative only during the tensioning operation, the locking of the pre-locking device with the belt shaft being eliminated when a predetermined load acting on the belt shaft in the belt extension direction is exceeded.

2. A safety belt retractor according to claim 1, **characterised in that** the pre-locking device is formed by a toothed disc (18) mounted on the housing (40) pivotally between a position of engagement into a coupling bell (15) connected to the belt shaft, and a release position, said toothed disc (18) being adapted to be coupled to the output wheel (13) via a transmission (22, 23; 50, 51, 53).

3. A safety belt retractor according to claim 1 or 2, **characterised in that** the transmission consists of a transmission mechanism with a transmission lever (22) acting by one end on the toothed disc (18) and connected by its other end to a control segment (23) mounted pivotally on the housing (40).

4. A safety belt retractor according claim 3, **characterised in that** the control segment (23) is pivotable by the drive wheel (13) between a release position holding the toothed disc (18) disengaged from the outer toothing (17) of the coupling bell (15), and a locking position controlling the toothed disc (18) into engagement with the outer toothing (17) of the coupling bell (15).

5. A safety belt retractor according claim 4, **characterised in that** a large transmission ratio is formed between the output wheel (13) and the control segment (23).

6. A safety belt retractor according to claim 4 or 5, **characterised in that** the control segment is constructed as a toothed segment (23) and cooperates with an outer toothing (14) formed on the output wheel (13).

7. A safety belt retractor according claim 6, **characterised in that** in both its release position and in its locking position the toothed segment (23) remains with at least one tooth (25) in contact with the outer toothing (14) of the output wheel (13) and on rotation of the output wheel (13) the outer toothing (14) of the output wheel (13) scrapes, in both directions of rotation, over the engaged tooth (25) of the toothed segment (23).

8. A safety belt retractor according claim 7, **characterised in that** the toothing (24) of the toothed segment (23) is constructed to be elastic.

9. A safety belt retractor according to claim 4 or 5, **characterised in that** a permanent frictional connection is formed between the control segment and the output wheel (13).

10. A safety belt retractor according to any one of claims 4 to 9, **characterised in that** the control segment both in its release position and in its locking position is prestressed by a spring (28).

11. A safety belt retractor according to claim 10, **characterised in that** the connection between the toothed disc (18) and the transmission lever (22) is formed with a clearance and the toothed disc (18) is prestressed by a spring (32) into its position of engagement with the outer toothing (17) of the coupling bell (15).

12. A safety belt retractor according to claim 1 or 2, **characterised in that** the transmission consists of a transmission wheel (50) meshing with the output wheel (13) and of a coupling wheel (51) driven thereby, the connection between the toothed disc (18) and the coupling wheel (15) being a frictional connection with the possibility of a relative movement of the toothed disc (18) and the coupling wheel (51) relatively to one another.

13. A safety belt retractor according to claim 12, **characterised in that** the coupling wheel (51) is disposed coaxially to the axis of rotation of the toothed disc (18) and acts on the toothed disc (18) via a coupling element (53) axially slidable against spring action in a sleeve (52) disposed axially on the coupling wheel (51).

14. A safety belt retractor according to claim 13, **characterised in that** a spring (54) prestressing the coupling element (53) into engagement with the toothed disc (18) is disposed between the coupling element (53) and the coupling wheel (51) with the sleeve (52).

15. A safety belt retractor according to any one of claims 12 to 14, **characterised in that** an axially interengaging toothing (55) with axially projecting tooth flanks (56) is constructed on the coupling element (53) and the toothed disc (18) respectively and on the relative rotation of the coupling element (53) and the toothed disc (18) to one another the tooth flanks (56) slide over one another.

16. A safety belt retractor according to claim 15, **characterised in that** the pitch of the tooth flanks (56) is steeper in the opposite direction to the direction in which the toothed disc (18) is controlled into the outer toothing (17) of the coupling bell (15) than in the other direction.

17. A safety belt retractor according to any one of claims 13 to 16, **characterised in that** the coupling element (53) consists of an elastomeric material.

18. A safety belt retractor according to any one of claims 13 to 16, **characterised in that** an additional spring (57) is disposed between the toothed disc (18) and the coupling element (53) consisting of a non-resilient material.

19. A safety belt retractor according to any one of claims 1 to 18, **characterised in that** the toothing (19) of the toothed disc (18) which, during the tensioning operation, is controlled into engagement with the outer toothing (17) of the coupling bell (15) is so constructed that on rotation of the belt shaft with the coupling bell (15) in the tensioning direction the outer toothing (17) of the coupling bell (15) scrapes over the toothing (19) of the toothed disc (18).

20. A safety belt retractor according to any one of claims 1 to 19, **characterised in that** the transmission (22, 23; 50, 51, 53) is so constructed that the toothed disc (18) follows the rotation of the output wheel (13) in the belt extension direction with a delay.

21. A safety belt retractor according to claim 20, **characterised in that** the output wheel (13) is coupled with a free wheel to the transmission mechanism (22, 23) or the transmission wheel (50).

22. A safety belt retractor according to any one of claims 1 to 21, **characterised in that** the mounting of the toothed disc (18) is so constructed that on rotation of the output wheel (13) in the belt extension direction the toothed disc follows the rotation of the coupling bell (15) in the belt extension direction over a predetermined distance before it is controlled out of engagement with the outer toothing (17).

## Revendications

1. Enrouleur de ceinture de sécurité ( 10), à utiliser en particulier dans des véhicules automobiles, avec un système de blocage actionné de manière sensitive par rapport au véhicule et/ou à la ceinture et avec un prétensionneur de ceinture agissant sur l'arbre de l'enrouleur, l'arbre de l'enrouleur pouvant être couplé, par l'intermédiaire d'un engrenage (12) intercalé, à une roue de sortie (13) actionnée par un moteur électrique (11) formant l'entraînement du prétensionneur, et l'engrenage (12) comportant au moins une position de commande destinée à plaquer tout d'abord le passager dans le siège moyennant une rotation en retour de l'arbre d'enrouleur dans le sens d'enroulement, **caractérisé en ce que** dans la zone du couplage entre la roue de sortie (13) et l'arbre d'enrouleur est agencé un dispositif de pré-verrouillage (18 ; 22, 23 ; 50, 51, 53) de l'arbre d'enrouleur, qui peut être commandé par la rotation de l'arbre de sortie (13) dans le sens d'une rétraction de la ceinture et dans le sens d'une détente de la ceinture et qui agit seulement pendant le processus de prétensionnement, et dont le verrouillage avec l'arbre d'enrouleur est supprimé en cas de dépassement d'une charge prédéfinie agissant sur l'arbre d'enrouleur dans le sens d'une détente de la ceinture.

2. Enrouleur de ceinture de sécurité selon la revendication 1, **caractérisé en ce que** le dispositif de pré-verrouillage est formé par un disque denté (18), qui est monté sur le boîtier (40) de manière pivotante entre une position d'engrènement dans une denture extérieure (17), réalisée sur une calotte de couplage (15) reliée à l'arbre d'enrouleur, et une position de désengrènement, et qui peut être couplé à la roue de sortie (13) par l'intermédiaire d'un engrenage (22, 23 ; 50, 51, 53).

3. Enrouleur de ceinture de sécurité selon la revendication 1 ou 2, **caractérisé en ce que** l'engrenage est formé par un mécanisme de transmission avec un levier de transmission (22) entrant en prise avec l'une de ses extrémités avec le disque denté (18) et relié de manière pivotante par son autre extrémité avec un segment de commande (23) monté pivotant sur le boîtier (40).

4. Enrouleur de ceinture de sécurité selon la revendication 3, **caractérisé en ce que** le segment de commande (23) est entraîné en pivotement par l'arbre de sortie (13) entre une position de désolidarisation, dans laquelle le disque denté (18) n'engrène pas avec la denture extérieure (17) de la calotte de couplage (15), et une position de verrouillage, dans laquelle le disque denté (18) est actionné pour engrener avec la denture extérieure (17) de la calotte de couplage (15).

5. Enrouleur de ceinture de sécurité selon la revendication 4, **caractérisé en ce qu'**un rapport de multiplication élevé est réalisé entre la roue de sortie (13) et le segment de commande (23).

6. Enrouleur de ceinture de sécurité selon la revendication 4 ou 5, **caractérisé en ce que** le segment de commande est conçu sous forme de segment denté (23) et coopère avec une denture extérieure (14) réalisée sur la roue de sortie (13).

7. Enrouleur de ceinture de sécurité selon la revendication 6, **caractérisé en ce que** le segment denté (23), dans sa position de désolidarisation, de même que dans sa position de verrouillage, reste dans chaque cas avec au moins une dent (25) en contact avec la denture extérieure (14) de la roue de sortie (13) et, en cas de rotation de la roue de sortie (13), la denture extérieure (14) de la roue de sortie (13) glisse dans les deux sens de rotation respectivement au-dessus de la dent (25) en prise du segment denté (23).

8. Enrouleur de ceinture de sécurité selon la revendication 7, **caractérisé en ce que** la denture (24) du segment denté (23) est élastique.

9. Enrouleur de ceinture de sécurité selon la revendication 4 ou 5, **caractérisé en ce qu'**un assemblage par friction permanent est réalisé entre le segment de commande et la roue de sortie (13).

10. Enrouleur de ceinture de sécurité selon l'une quelconque des revendications 4 à 9, **caractérisé en ce que** le segment de commande est précontraint par un ressort (28) dans sa position de désolidarisation, de même que dans sa position de verrouillage.

11. Enrouleur de ceinture de sécurité selon la revendication 10, **caractérisé en ce qu'**un jeu est réalisé dans l'assemblage entre le disque denté (18) et le levier de transmission (22), et le disque denté (18) est précontraint par un ressort (32) dans sa position d'engrènement avec la denture extérieure (17) de la calotte de couplage (15).

12. Enrouleur de ceinture de sécurité selon la revendication 1 ou 2, **caractérisé en ce que** l'engrenage est formé par une roue de transmission (50), engrenant avec la roue de sortie (13), et une roue de couplage (51) actionnée par ladite roue de transmission, l'assemblage entre le disque denté (18) et la roue de couplage (51) étant assuré par un assemblage par friction avec la possibilité d'un mouvement relatif entre le disque denté ( 18) et la roue de couplage ( 51) l'un par rapport à l'autre.

13. Enrouleur de ceinture de sécurité selon la revendication 12, **caractérisé en ce que** la roue de couplage (51) est agencée coaxialement à l'axe de rotation du disque denté (18) et agit sur le disque denté (18) par l'intermédiaire d'un élément de couplage (53) mobile axialement, à l'encontre de l'action du ressort, dans une douille (52) agencée axialement sur la roue de couplage (51).

14. Enrouleur de ceinture de sécurité selon la revendication 13, **caractérisé en ce qu'**entre l'élément de couplage (53) et la roue de couplage (51) avec la douille (52) est agencé un ressort (54) par lequel l'élément de couplage (53) est précontraint en engrènement avec le disque denté (18).

15. Enrouleur de ceinture de sécurité selon l'une quelconque des revendications 12 à 14, **caractérisé en ce que** sur l'élément de couplage (53) et le disque denté (18) est réalisée respectivement une denture (55), engrenant axialement et munie de flancs dentés (56) en saillie axiale, et les flancs dentés (56) glissent l'un sur l'autre en cas de rotation relative entre l'élément de couplage (53) et le disque denté (18) l'un par rapport à l'autre.

16. Enrouleur de ceinture de sécurité selon la revendication 15, **caractérisé en ce que** le pas d'hélice des flancs dentés (56), dans le sens opposé au sens de prise du disque denté (18) dans la denture extérieure (17) de la calotte de couplage (15), est plus accentué que dans le sens de prise.

17. Enrouleur de ceinture de sécurité selon l'une quelconque des revendications 13 à 16, **caractérisé en ce que** l'élément de couplage (53) est réalisé dans un matériau élastomère.

18. Enrouleur de ceinture de sécurité selon l'une quelconque des revendications 13 à 16, **caractérisé en ce qu'**un ressort (57) supplémentaire est agencé entre l'élément de couplage (53), réalisé dans un matériau non flexible, et le disque denté (18).

19. Enrouleur de ceinture de sécurité selon l'une quelconque des revendications 1 à 18, **caractérisé en ce que** la denture (19) du disque denté (18), commandé en engrènement avec la denture extérieure (17) de la calotte de couplage (15) pendant le processus de prétensionnement, est conçue de telle sorte que, en cas de rotation de l'arbre d'enrouleur avec la calotte de couplage (15) dans le sens d'une rétraction, la denture extérieure (17) de la calotte de couplage (15) glisse sur la denture (19) du disque denté (18).

20. Enrouleur de ceinture de sécurité selon l'une quelconque des revendications 1 à 19, **caractérisé en ce que** l'engrenage (22, 23 ; 50, 51, 53) est conçu de telle sorte que le disque denté (18) suit, avec un décalage dans le temps, la rotation de la roue de sortie (13) dans le sens d'une détente de la ceinture.

21. Enrouleur de ceinture de sécurité selon la revendication 20, **caractérisé en ce que** la roue de sortie (13) est couplée en rotation libre avec le mécanisme de transmission (22, 23) ou la roue de transmission (50).

22. Enrouleur de ceinture de sécurité selon l'une quelconque des revendications 1 à 21, **caractérisé en ce que** le système de palier du disque denté (18) est conçu de telle sorte que le disque denté (18), en cas de rotation de la roue de sortie (13) dans le sens d'une détente de la ceinture, avant d'être commandée en désengrènement de la denture extérieure (17) de la calotte de couplage (15), suit la rotation de la calotte de couplage (15) sur une trajectoire prédéfinie dans le sens d'une détente de la ceinture.
